# EUROPÄISCHE PATENTSCHRIFT

(11) **EP 2 896 571 B1**
(45) Veröffentlichungstag und Bekanntmachung des Hinweises auf die Patenterteilung: **08.06.2016**
(21) Anmeldenummer: 14151710.2
(22) Anmeldetag: 20.01.2014
(51) Int. Cl.: B65B 1/28, B65B 1/32

(54) **DOSIER-VORRICHTUNG UND VERFAHREN ZUM DOSIEREN**
METERING DEVICE AND METHOD FOR METERING
DISPOSITIF DE DOSAGE ET PROCÉDÉ DE DOSAGE

(43) Veröffentlichungstag der Anmeldung: 22.07.2015
(73) Patentinhaber: JetSolutions SA, 1728 Rossens (CH)
(72) Erfinder: Magnin, Guy, 1633 Vuippens (CH); Dumont, Jean Pierre, 1726 Farvagny (CH); Leva, Daniel, 1635 La Tour de Trême (CH)
(74) Vertreter: Stocker, Kurt

(56) Entgegenhaltungen:
- EP-A1- 0 616 945
- EP-A2- 1 334 906
- WO-A1-2007/007155
- US-A1- 2012 180 435

## Beschreibung

Die Erfindung bezieht sich auf eine Dosier-Vorrichtung nach dem Oberbegriff des Anspruches 1 und ein Verfahren zum Dosieren nach dem Oberbegriff des Anspruchs 9.

Ein schütt- oder fliessfähiges Produkt bzw. Gut wird von einer Dosier-Vorrichtung in gewünschten Mengen in Behälter oder Säcke abgefüllt. Beim Dosieren gelangt das Produkt beispielsweise aus einem Behälter über einen Trichter zu einem Dosierschieber oder einem anderen Dosierelement. Der Durchfluss des zu dosierenden Produktes entspricht im Wesentlichen der Position des Dosierschiebers, bzw. der Öffnung des Dosierelements einer Dosiereinheit. Beim Befüllen eines Sackes oder Behälters wird von einer Steuerung der Dosier-Vorrichtung zuerst ein grosser Durchfluss und bei der Annäherung an das gewünschte Füllgewicht ein kleiner Durchfluss eingestellt. So kann bei kurzer Befüllzeit ein möglichst genaues Füllgewicht erzielt werden. Wenn das gewünschte Gewicht erreicht ist, muss das Dosierelement verschlossen sein. Während des Befüllens muss immer wieder eine Gewichtsbestimmung durchgeführt werden. Dazu umfasst die Dosier-Vorrichtung eine Waage, welche das Gewicht des Sackes oder Behälters mit dem eingetragenen Produkt bestimmt.

Wenn das Produkt vom Dosierschieber bzw. Dosierelement zum Sack oder Behälter durch einen zur Umgebung offenen Bereich strömt, so kann einerseits Produkt in die Umgebung und andererseits eine Verunreinigung in das abgefüllte Produkt gelangen. Diese offene Dosierung ist bei toxischen Produkten oder bei Produkten mit hohen Ansprüchen an die Reinheit nicht geeignet. Aus dem Stande der Technik sind Lösungen bekannt bei denen das Dosieren in gegen die Umgebung abgeschlossenen Vorrichtungen erfolgt.

EP 616 945 A1 beschreibt ein Verfahren zum Abfüllen von gefährlichen Stoffen in Fasscontainer mit darin angeordneten Säcken, bei welchem die abzufüllenden Stoffe durch einen Auslauf einer Produktionsanlage in einem Handschuh-Kasten in den auf einer Waage angeordneten Fasscontainer eingefüllt werden. Ein im Fasscontainer zu befüllender Sack wird im Handschuh-Kasten dicht mit dem Auslauf der Produktionsanlage verbunden. Im Übergangsbereich zwischen dem Handschuh-Kasten und dem darunter angeordneten Fasscontainer ist eine flexible Abdichteinrichtung angeordnet, welche den Innenraum des Handschuh-Kastens und des Fasscontainers dicht von der Umgebung abtrennt und die Gewichtsmessung möglichst nicht beeinträchtigen soll.

Beim Auslauf der Produktionsanlage ist ein an das Innere des zu befüllenden Sackes anschliessender Absaugstutzen angeordnet, über den von einem Ventilator Luft durch eine Absaugleitung und Filter abgesaugt wird. Beim Befüllen des Sackes wird Luft abgesaugt und durch die Filter an die Umgebung abgegeben.

Wenn die Waage das gewünschte Füllgewicht erfasst, wird die Befüllung des Sackes beendet. Bei anhaltendem Absaugen von Luft über dem Füllgut im Sack werden zwei Sackverschlüsse angebracht und weiter Luft aus dem Bereich über dem Verschluss aus dem Auslauf abgesaugt. Nach dem Durchtrennen des Sackes zwischen den beiden Verschlüssen kann der volle Sack im Fasscontainer abtransportiert und ein neuer zu befüllender Fasscontainer mit Sack eingesetzt werden. Nach dem Entfernen des am Auslauf verbliebenen oberen Endes des vorgängig befüllten Sackes kann der neue Sack am Auslauf angeschlossen werden. Vom oberen Ende des vorgängig befüllten Sackes kann Produkt in den Handschuh-Kasten gelangen. Der Handschuh-Kasten wird mittels Luft gespült, die vom Ventilator angetrieben durch einen Zuluftfilter eintritt und durch einen Auslassfilter austritt.

Bei dieser abgeschlossenen Dosierung gewährleisten Filter, dass aus dem abgeschlossenen Bereich zusammen mit der ausgetragenen Luft bzw. dem Gas keine toxischen Produkte ausgetragen werden. Bei der abgeschlossenen Dosierung wird das abgefüllte Produkt auch nicht von aussen mit Verunreinigungen belastet. Bei der beschriebenen Lösung verhindert der Zuluftfilter den Eintritt von Verunreinigungen in den Hanschuh-Kasten.

Es hat sich nun gezeigt, dass zwar das Austreten von Produkt an die Umgebung und die Verunreinigung des abgefüllten Produkts weitgehend vermieden werden können, dass aber das Füllgewicht der befüllten Fasscontainer nicht genügend genau mit dem gewünschten Gewicht übereinstimmt.

Wenn der Bereich zwischen dem Auslass der Dosier-Vorrichtung und dem auf einer Waage zu befüllenden Sack oder Behälter gegen die Umgebung abgeschlossen wird, beispielsweise mit einer Manschette, so wird die Gewichtsbestimmung mit Fehlern belastet. Ungenaue Füllgewichte können aber bei vielen Produkten, insbesondere bei sehr teuren Produkten, nicht akzeptiert werden.

Die erfindungsgemässe Aufgabe besteht nun darin eine einfache Lösung zu finden, bei der das Austreten von Produkt an die Umgebung weitgehend vermieden wird und auch das Füllgewicht der befüllten Fasscontainer sehr genau mit dem gewünschten Gewicht übereinstimmt. Zudem sollen die Säcke bzw. Behälter möglichst schnell befüllt werden können.

Die Aufgabe wird durch eine Dosier-Vorrichtung mit den Merkmalen des Anspruches 1, bzw. durch ein Verfahren mit den Merkmalen des Anspruchs 9 gelöst. Die abhängigen Ansprüche beschreiben alternative bzw. vorteilhafte Ausführungsvarianten, welche weitere Aufgaben lösen.

Um das Austreten von Produkt an die Umgebung zu vermeiden, muss der Bereich zwischen dem Auslass der Dosier-Vorrichtung und dem auf einer Waage zu befüllenden Sack oder Behälter gegen die Umgebung abgeschlossen werden, beispielsweise mit einer Manschette. Bei der Lösung der Aufgabe wurde erkannt, dass bei einem solchen Abschluss das in den Sack strömende Produkt die ursprünglich im Sack befindliche Luft verdrängt, wobei diese verdrängte Luft aufgrund des Abschlusses gegen die Umgebung nicht an die Umgebung austreten kann. Innerhalb des abgeschlossenen Bereichs entsteht ein Überdruck, der über das Produkt im Sack bzw. im Behälter auf die Waage wirkt und bei der Waage eine Kraft erzielt, die von der Waage als zusätzliches Gewicht angezeigt wird. Wenn in einem abgeschlossenen Dosiersystem ein Behälter mit 50 kg Produkt befüllt wird, kann das durch den entstehenden Überdruck erzeugte scheinbare Zusatzgewicht bis zu 3.5 kg betragen, was einem inakzeptablen Fehler im Bereich von 7% entspricht. Bei genauen Dosieranlagen wird erwartet, dass auch bei Füllgewichten von beispielsweie 50kg eine Genauigkeit von wenigen Grammen beispielsweise von ±20g erzielt werden kann.

Bei Lösungen gemäss EP 616 945 A1 wird beim Befüllen des Sackes bzw. Fasscontainers Luft abgesaugt. Ein Ventilator saugt mit konstanter Leistung über einen Absaugstutzen, eine Absaugleitung und einen Filter Luft bzw. Gas aus dem Inneren des zu befüllenden Sackes ab. Zudem wird auch aus dem Handschuh-Kasten ausserhalb des zu füllenden Sackes Luft abgesaugt. Bei dieser Lösung ergeben sich nicht genügend genaue Füllgewichte.

Im Rahmen eines ersten erfinderischen Schrittes wurde erkannt, dass die Saugleistung bzw. das pro Zeit aus dem Innern des Sackes und/oder des Behälters abgesaugte Luftvolumen der jeweiligen Volumenänderung aufgrund des zugeführten Produkts entsprechen muss. Damit kann eine Änderung des Druckes im abgeschlossenen Bereich minimiert werden und entsprechend ist die Gewichtsmessung immer möglichst fehlerfrei. Für das schnelle und genaue Füllen der Säcke bzw. Behälter ist es wichtig, dass vom Dosierelement am Anfang des Füllvorgangs ein hoher Produktfluss und am Ende ein kleiner Produktfluss eingestellt wird und entsprechend am Anfang ein hoher und am Ende ein tiefer Absaugfluss, bzw. eine entsprechende Saugleistung einstellbar ist. Erfindungsgemäss passt die Steuerung den Austrag von Luft bzw. Gas aus dem abgeschlossenen Bereich während des Dosierens zeitlich variabel an den vom Dosierelement veränderten Produktfluss an.

Beim Dosieren gelangt ein Produkt mit spezifischen Eigenschaften beispielsweise aus einem Behälter über einen Trichter zum Dosierelement. Bei Produkten, die verklumpen können, wird gegebenenfalls im Trichter über dem Dosierelement ein entlang der Trichterwand abstreifender Schaber angeordnet. Es kann nun sein, dass während des Austrags mit grosser Dosieröffnung ein stark schwankender Produkt-Durchfluss entsteht, dem ein zeitlich entsprechend variierender Austrags-Durchfluss von Luft zugeordnet werden muss. Bei der erfinderischen Lösung wird im zeitlichen Verlauf der Volumenstrom der ausgetragenen Luft an den Volumenstrom des in den Sack eingefüllten Produktes angenähert. Damit kann die Genauigkeit der Gewichtsmessung beim Einfüllen des Produktes wesentlich erhöht werden.

Im Rahmen eines zweiten erfinderischen Schrittes wurde erkannt, dass bei einer bevorzugten Ausführung zur Einstellung des optimalen Austrags von Luft bzw. Gas, also zur Regelung des zeitlichen Verlaufs des Volumenstroms aus dem abgeschlossenen Bereich zwischen dem Auslass der Dosier-Vorrichtung und dem auf der Waage zu befüllenden Sack oder Behälter der Druck in diesem abgeschlossenen Bereich gemessen wird. Insbesondere wird ein Druckunterschied zwischen dem abgeschlossenen Bereich und der Umgebung gemessen. Der Ventilator wird dann so angetrieben, dass der Druck im abgeschlossenen Bereich möglichst nahe beim Umgebungsdruck bleibt, damit die Gewichtsbestimmung nicht verfälscht ist. Versuche mit einer spezifischen Dosier-Vorrichtung haben gezeigt, dass beispielsweise ein Druckanstieg im abgeschlossenen Bereich relativ zum Umgebungsdruck um 10 Pa (Pascal) bereits eine Änderung des von der Waage ermittelten Gewichts um 70g bewirkt.

Eine Steuerung der Dosier-Vorrichtung erfasst mit mindestens einem Drucksensor einen zeitlichen Verlauf eines Druckwertes für den abgeschlossenen Bereich, vorzugsweise den Differenzdruck zwischen dem abgeschlossenen Bereich und der Umgebung. Aus dem zeitlichen Verlauf des Druckwertes während des Dosierens kann ein Steuersignal für den optimalen Austrag von Luft bzw. Gas aus dem abgeschlossenen Bereich bestimmt werden.

Zur Steuerung des aus dem abgeschlossenen Bereich ausgetragenen Gasvolumenstroms wird der Druck bzw. die Druckdifferenz gemessen und signaltechnisch geglättet, beispielsweise mit einstellbaren zeitlichen Glättungsfiltern in der Anlagensteuerung. Dafür wird in der Steuerung vorzugsweise ein zeitlich frei wählbares Zeitfenster vorgegeben. Vorzugsweise wird auch die Änderung des Drucks, bzw. eine zeitliche Ableitung des Druckverlaufs bestimmt, insbesondere mit einem wählbaren Ableitungs-Zeitintervall. Die ausgetragene Gas- bzw. Luftmenge wird vorzugsweise über die Steuerung der Ventilatorleistung kontrolliert. Gegebenenfalls wird die Ventilatorleistung zumindest für bestimmte Zeitabschnitte des Dosiervorgangs im Wesentlichen konstant gehalten und die ausgetragene Luftmenge über die Steuerung mindestens eines Ventils zwischen dem Ventilator und dem abgeschlossenen Bereich kontrolliert. Sowohl für eine bevorzugte Ventilatorsteuerung als auch für eine mögliche Ventilsteuerung wird ein aus der Druckmessung abgeleiteter Wert verwendet.

Aus dem geglätteten Druckverlauf, der mit einer vorgegebenen Verzögerungszeit verwendeten Ableitung und einer vorgegebenen Verstärkung wird die Leistung des Ventilators und/oder die Öffnung des Ventils geregelt. Das Glättungsfenster, das Ableitungs-Zeitintervall, die Verzögerungszeit der verwendeten Ableitung und die Verstärkung sind Parameter, welche an die spezifische Dosier-Vorrichtungen und gegebenenfalls auch an die zu dosierenden Produkte angepasst werden können. Die Parameter werden so gewählt, dass Abweichungen vom Umgebungsdruck möglichst schnell aber nicht überschiessend korrigiert werden.

Versuche mit einer bevorzugten Dosier-Vorrichtung haben gezeigt, dass die Verzögerungszeit der verwendeten Ableitung vorzugsweise im Bereich von 10 bis 100 ms (Millisekunden), insbesondere bei circa 50 ms gewählt wird. Das Ableitungs-Zeitintervall liegt vorzugsweise in einem Bereich von 100 bis 1000 ms, insbesondere in einem Bereich von 150 bis 550 ms. Das bevorzugte Glättungsfenster hat eine zeitliche Ausdehnung im Bereich von 400 bis 2200 ms, wobei es insbesondere in einem Bereich von 450 bis 600 ms liegt. Die Verstärkung des Steuersignals für den Ventilator hängt von der Antriebssteuerung und vom Ventilator ab. Vorzugsweise wird ein Ventilator mit einem frequenzgesteuerten Antrieb verwendet. Um die Abweichung vom Umgebungsdruck so klein wie möglich zu halten, ist es vorteilhaft, wenn die Parameter so gewählt werden, dass das Gesamtsystem genügend reaktiv ist. In einer bevorzugten Ausführung führt der Ventilator kurze Absaugphasen von lediglich ca. 2 bis 8 s (Sekunden) Länge durch, wobei die maximale Leistung bzw. Drehzahl (Drehgeschwindigkeit) des Ventilators der verschiedenen Absaugphasen stark variiert.

Anstelle oder gegebenenfalls in Ergänzung zum zeitlichen Verlauf der Druckmessung kann für die Erfassung des zeitlichen Verlaufs des Volumenstroms des in den Sack eingefüllten Produktes gegebenenfalls der zeitliche Verlauf des von der Waage gemessen Gewichts verwendet werden. Dabei muss das vom Produkt gefüllte Volumen, bzw. der Volumenstrom, ausgehend von der Gewichtsmessung unter Berücksichtigung der Dichte des Produktes angenähert werden. Um den Druck im Wesentlichen konstant zu halten, wird der zeitliche Verlauf des Volumenstroms der ausgetragenen Luft an den angenähert bestimmten zeitlichen Verlauf des Volumenstroms des Produktes angepasst.

Für die Erfassung des zeitlichen Verlaufs des Volumenstroms des in den Sack einströmenden Produktes kann auch gegebenenfalls eine optische, akustische, elektrische oder elektromagnetische Messung durchgeführt werden. Solche Bestimmungen haben aber den Nachteil, dass sie von Produkteigenschaften abhängen und nur indirekt und somit nur ungenau eine Abschätzung der damit verbundenen Druckänderung ermöglichen.

Bei Säcken mit anfänglich gefalteten Bereichen kann sich das Innenvolumen während des Füllvorgangs ändern. Dann ist die Druckänderung im Sack nicht direkt bzw. nicht nur von der Menge des eingefüllten Produkts abhängig und entsprechend wird die Messung des Drucks eine genauere Steuerung der auszutragenden Luft liefern als Messungen, welche den Volumenstrom des eingefüllten Produkts abschätzen.

Damit beim Austragen von Luft aus dem abgeschlossenen Bereich der Austritt von gegebenenfalls toxischem Produkt verhindert werden kann, muss diese Luft durch mindestens einen Filter in die Umgebung abgegeben werden. Der Filter hält das Produkt zurück. Wenn der Filter aufgrund des zurückgehaltenen Produkts den Austrag von Luft bzw. die gewünschte Reduktion des Drucks bei vorgegebener Ventilatorleistung weniger gut erzielen kann, wird während des Dosiervorgangs gegebenenfalls die Ventilatorleistung entsprechend erhöht. Bei Bedarf wird der Filter zwischen einzelnen Dosiervorgängen geprüft und gegebenenfalls gereinigt, beispielsweise mit Druckluft-Stössen oder gegebenenfalls mit Abstreif- oder Abschüttelschritten, wobei das abgelöste Produkt vorzugsweise in einen Sammelbereich gelangt, der von Zeit zu Zeit entleert wird.

Mit der im Wesentlichen kontinuierlichen Anpassung des Drucks im abgeschlossenen Bereich kann gewährleistet werden, dass der Druck im Wesentlichen immer beim Umgebungsdruck liegt, wobei die maximale Abweichung nur wenige Pascal beträgt, beispielsweise 4 Pa. Wenn nun der von der Waage bestimmte Gewichtswert um 7g/Pa ändert, liegen die mit den Druckschwankungen verbundenen Messschwankungen des Gewichts in einem Bereich von 0 bis 28g. Am Ende des Dosiervorgangs wird nur noch ein kleiner Produktfluss eingestellt, bei dem die Druckänderung sehr klein ist und Druckschwankungen kaum mehr auftreten. Entsprechend ist auch der für den Druckausgleich nötige Luftaustrag bzw. dessen Änderung sehr klein. Damit hängt die Gewichtsbestimmung bzw. deren Genauigkeit am Ende des Dosiervorgangs kaum mehr von Druckunterschieden ab. Der Druck liegt dann in einem Bereich zwischen dem Umgebungsdruck und einem Druck von 1 Pa über dem Umgebungsdruck, was mit einer Gewichtsabweichung von weniger als 7g verbunden ist.

Mit einer Ausführungsform, bei der die Ventilatorleistung bzw. die Drehgeschwindigkeit des Ventilatorantriebs abhängig vom gemessenen Druck variiert wurde, konnte die Abweichung des Drucks im abgeschlossenen Bereich vom Umgebungsdruck im Wesentlichen soweit konstant gehalten werden, dass bei der Gewichtsbestimmung der Waage am Ende des Dosiervorgangs bei einem Abfüllgewicht von 50 kg die Ungenauigkeit unterhalb von ±5g liegt.

Diese hohe Genauigkeit ist dankt der Druckbestimmung und der davon abhängigen Steuerung des Luftaustrags möglich. Gegenüber den aus dem Stande der Technik bekannten Lösungen ist diese Genauigkeit wesentlich höher. Mit einer Anordnung nach dem Stande der Technik, die mittels einer vorgegebenen festen Saugleistung und einem Falschluftanschluss Luft aus dem abgeschlossenen Bereich austrägt, kann keine genaue Gewichtsbestimmung ermöglicht werden. Aufgrund des Venturi-Effekts wird abhängig vom während des Dosierens variablen Falschluftanteil ein variabler Unterdruck im abgeschlossenen Bereich eingestellt. Zudem muss die gesamte Luft, also die Luft aus dem abgeschlossenen Bereich und die Falschluft durch einen Filter geführt werden, der auf die wesentlich höhere Durchsatzmenge ausgelegt werden muss, was mit unerwünschtem Aufwand verbunden ist. Bei höherem Durchsatz muss auch der Aufwand für die Filterreinigung erhöht werden.

Wenn bei einem geschlossenen System gemäss dem Stande der Technik keine Luft ausgetragen wird, so wird das Gewicht aufgrund des entstehenden Überdrucks falsch gemessen. Bei einem geschlossenen System gemäss dem Stande der Technik, das einen konstanten Austrag von Luft vorsieht, ist der Druck am Ende der Dosierung nicht definiert, es kann ein Überdruck oder ein Unterdruck vorliegen und entsprechend wird das Gewicht über- oder unterschätzt. Mit der erfindungsgemässen Lösung kann diese Ungenauigkeit beseitigt werden.

Die erfinderische Lösung ist eine einfache Lösung, bei der sowohl das Austreten von Produkt an die Umgebung weitgehend vermieden wird als auch das Füllgewicht der befüllten Behälter bzw. Säcke sehr genau mit dem gewünschten Gewicht übereinstimmt. Zudem können die Säcke bzw. Behälter sehr schnell befüllt werden. Bereits während des Befüllens wird das Gewicht sehr genau bestimmt. Am Ende eines Dosiervorgangs ist die Gewichtsbestimmung nicht durch Störeffekte verfälscht.

Besonders vorteilhaft ist die erfinderische Lösung, wenn die zu befüllenden Säcke als Abschnitte eines Schlauches ausgebildet sind. Das Schlauchmaterial schliesst in zusammengeraffter Form dicht an die flexible Abdichteinrichtung an und wird von einer Tragkonstruktion der Waage gehalten. Indem am unteren Ende des Schlauchmaterials immer ein dichter Abschluss ausgebildet ist, kann ein Austreten von Produkt ausgeschlossen werden, ohne dass ein dicht abschliessender Handschuh-Kasten benötigt wird. Beim Verschliessen eines gefüllten Schlauchabschnitts werden immer zwei Verschlüsse angebracht, einer als oberer Abschluss des unteren Abschnitts und einer als unterer Abschluss des nächsten Abschnitts.

In einer weiteren Ausführungsform wird die Druckmessung im abgeschlossenen Bereich bei einer vorgegebenen Ventilatorleistung dazu benutzt, um den Verstopfungsgrad des Filters zu bestimmen. Wenn der bestimmte Verstopfungsgrad zu gross ist, kann die Notwendigkeit eines Reinigungsschritts angezeigt werden. Der Reinigungsschritt wird mit Druckluft-Stössen oder gegebenenfalls mit Abstreif- oder Abschüttelschritten durchgeführt, wobei das abgelöste Produkt vorzugsweise in einen Sammelbereich gelangt, der von Zeit zu Zeit entleert wird. Für die Druckluft-Stösse wird ventilatorseitig am Filter eine Druckluftquelle angeschlossen, wobei in der Verbindung zwischen Druckluftquelle und Filter mindestens ein steuerbares Druckluftventil eingesetzt ist. Wenn auch nach dem Reinigungsschritt der Verstopfungsgrad noch zu hoch ist, wird die Notwendigkeit eines Filterwechsels angezeigt.

In einer weiteren Ausführungsform wird der abgeschlossene Bereich von der Druckluftquelle über ein steuerbares Druckluftventil mit einem vorgegebenen Überdruck beaufschlagt. Mit anschliessenden Druckmessungen im abgeschlossenen Bereich wird kontrolliert, ob bzw. wie schnell der Druck zum Umgebungsdruck abgebaut wird. Der Verlauf des Druckabbaus gibt einen Hinweis darauf, ob der abgeschlossene Bereich genügend dicht gegen die Umgebung abgeschlossen ist. Wenn die Dichtheit genügt kann ein Dosiervorgang durchgeführt werden. Wenn die Dichtheit ungenügend ist, wird dies angezeigt.

In einer weiteren Ausführungsform wird nach dem Erreichen des gewünschten Abfüllgewichts in einem Absaugschritt ein Unterdruck erzeugt. Wenn nach einem bestimmten Zeitraum eine signifikante Änderung des Unterdruckes im abgeschlossenen Bereich auftritt, so muss eine unzulässige Undichtheit vorliegen, was angezeigt wird.

Die Zeichnungen erläutern die Erfindung anhand eines Ausführungsbeispieles auf das sie aber nicht eingeschränkt ist. Dabei zeigt
- Fig. 1: eine schematische Darstellung der Dosier-Vorrichtung,
- Fig. 2: eine Darstellung des Druckverlaufs in einem abgeschlossenen Bereich ohne Luft-Austrag,
- Fig. 3 und 4: Darstellungen des Druckverlaufs (schwarz) im abgeschlossenen Bereich mit Luft-Austrag gemäss der Ventilator-Drehgeschwindigkeit (grau).

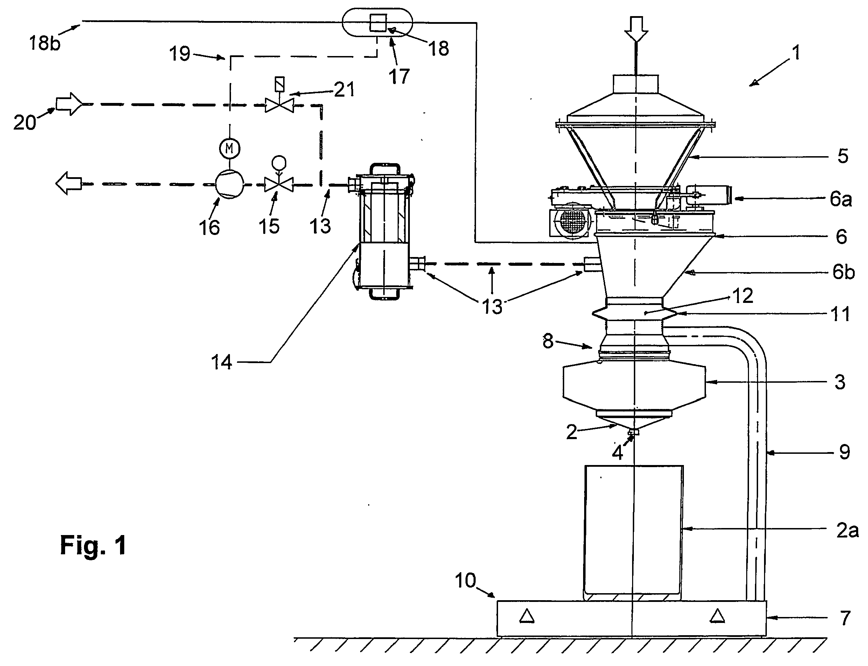

Fig. 1 zeigt eine Dosier-Vorrichtung 1 zum Abfüllen von schüttfähigen Produkten in Säcke 2 und/oder Behälter 2a. Die dargestellte Ausführungsform zeigt eine Lösung, bei welcher der Sack 2 als Abschnitt eines Schlauchmaterials 3 ausgebildet wird, wobei das untere Ende des Schlauchmaterials 3 mit einem Verschluss 4 verschlossen ist und vor oder bei dem Befüllen im Behälter 2a aufgenommen wird. Am oberen Ende der Dosier-Vorrichtung 1 ist eine Produktzuführung 5 ausgebildet, durch welche das zugeführte Produkt zur darunter liegenden Dosiereinheit 6 gelangt. Die Dosiereinheit 6 umfasst oben ein von einer Betätigungsvorrichtung 6a verstellbares Dosierelement, mit dem der Produktfluss angepasst werden kann. Unten umfasst die Dosiereinheit 6 einen Auslassbereich 6b.

Am unteren Ende der Dosier-Vorrichtung 1 befindet sich eine Waage 7 mit einem Anschlussbereich 8 für den zu befüllenden Sack 2. Der Anschlussbereich 8 ist über eine Tragverbindung 9 mit der Wäge-Plattform 10 verbunden. Eine flexible Verbindung 11 zwischen der Dosiereinheit 6 und dem Anschlussbereich 8 der Waage 7 schliesst einen abgeschlossenen Bereich 12 mit Innenräumen des Auslassbereichs 6b, des Anschlussbereichs 8 und des Sacks 2 dicht ab. Am abgeschlossenen Bereich 12, vorzugsweise beim Auslassbereich 6b, ist eine Absaugleitung 13 angeschlossen, die über einen Reinigungsfilter 14, ein Absaugventil 15 und einen Ventilator 16 Luft oder Gas aus dem abgeschlossenen Bereich 12 austragbar macht.

Eine nur schematisch dargestellte Steuerung 17 erfasst mit mindestens einem Drucksensor 18 einen zeitlichen Verlauf eines Druckwertes für den abgeschlossenen Bereich 12. Die Steuerung 17 verwendet den zeitlichen Verlauf des Druckwertes während des Dosierens zur Regelung des Austrags von Luft bzw. Gas aus dem abgeschlossenen Bereich 12. Dazu führt eine Steuerverbindung 19 von der Steuerung 17 zum Antrieb M des Ventilators 16. Vorzugsweise wird ein Ventilator 16 mit einem frequenzgesteuerten Antrieb M verwendet. Die Steuerung 17 ist über nicht eingezeichnete Leitungen mit weiteren Teilen der Dosier-Vorrichtung 1 verbunden, insbesondere natürlich mit der Waage 7, einer nicht dargestellten Eingabe- und Anzeigevorrichtung und allen steuerbaren Elementen, wie etwa der Betätigungsvorrichtung 6a für das Dosierelement der Dosiereinheit 6 und mit steuerbaren Ventilen, beispielsweise dem Absaugventil 15. Mit der Steuerung 17 wird auch die Dosiereinheit bzw. der Produktdurchfluss gesteuert und zwar abhängig von einem vorgegebenen Sollgewicht und einem von der Waage gemessenen Abfüllgewicht.

Die ausgetragene Luftmenge kann über die Ventilatorleistung und/oder über die Steuerung des Absaugventils 15 geregelt werden. Sowohl für eine mögliche Ventilatorsteuerung als auch für eine mögliche Ventilsteuerung wird ein aus der Druckmessung abgeleiteter Wert verwendet.

In der dargestellten Ausführungsform wird der verwendete Druckwert als Differenzdruck zwischen einer ersten Erfassungsstelle 18a im abgeschlossenen Bereich 12 und einer zweiten Erfassungsstelle 18b in der Umgebung der Dosier-Vorrichtung bestimmt. Die Steuerung 17 soll den Antrieb M des Ventilators 16 so steuern, dass der Differenzdruck während des gesamten Dosiervorgangs verschwindend klein bleibt. Eine bevorzugte Steuerung 17 glättet den zeitlichen Verlauf des verwendeten Druckwerts mit einem Glättungsfilter. Zudem wird zum Verlauf des Druckwerts aus den Änderungen während Ableitungs-Zeitintervallen ein Verlauf der zeitlichen Ableitung erstellt. Unter Verwendung des geglätteten Druckverlaufs, der mit einer vorgegebenen Verzögerungszeit verwendeten Ableitung und einer vorgegebenen Verstärkung wird die Leistung des Ventilators bzw. des Antriebs M und/oder die Öffnung des Absaugventils 15 eingestellt.

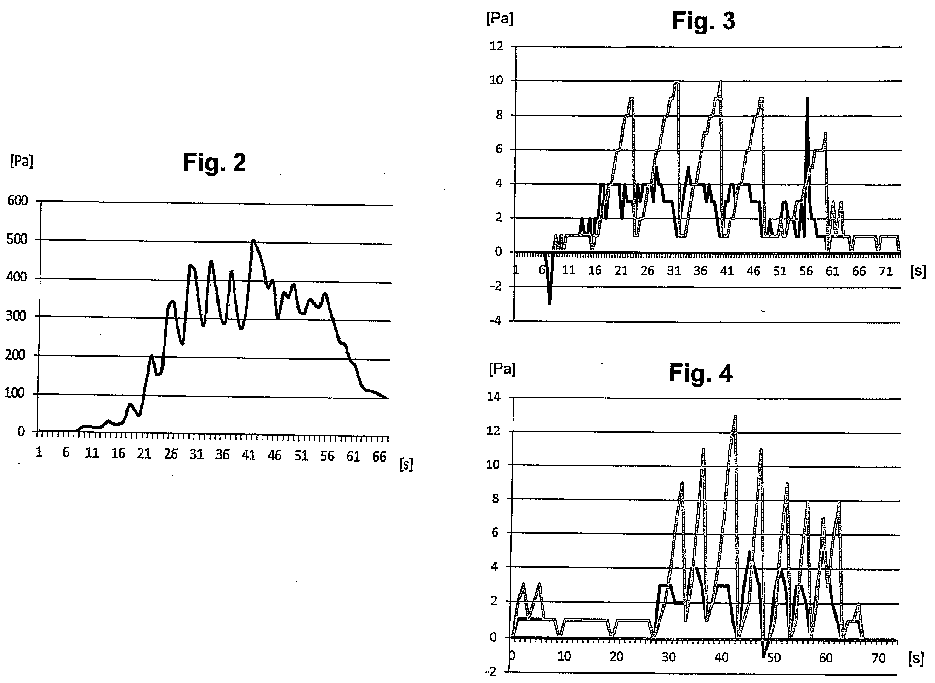

Fig. 2 zeigt für ein abgeschlossenes Dosiersystem ohne aktiven Luftaustrag (Stand der Technik) den Druckverlauf während eines Dosiervorgangs, wobei der Überdruck in Pa (Pascal) im zeitlichen Verlauf über 66 s (Sekunden) dargestellt ist. Innerhalb des abgeschlossenen Bereichs entsteht ein Überdruck, der über das Produkt im Sack bzw. im Behälter auf die Waage wirkt und bei der Waage eine Kraft erzielt, die von der Waage als zusätzliches Gewicht angezeigt wird. Der maximale Überdruck von 500 Pa entspricht einem scheinbaren Zusatzgewicht von 3.5 kg, was einem Fehler entspricht, der sich auf den Dosierverlauf auswirkt. Weil der abgeschlossene Bereich nicht vollständig dicht abgeschlossen ist, geht der Überdruck am Ende des Dosiervorgangs auf 100 Pa zurück, was aber immer noch mit einem Gewichtsfehler von 0.7 kg verbunden ist.

Fig. 3 und 4 zeigen für erfindungsgemässe Lösungen in schwarz den Druckverlauf in Pa und in grau die Drehzahl (Drehgeschwindigkeit) des Ventilators in Prozent einer Maximal-Drehzahl. Anhand der Druckmessung wird kontinuierlich die Leistung des Ventilators angepasst. Die beiden Diagramme zeigen zwei verschiedene Versuche mit einer bevorzugten Dosier-Vorrichtung, wobei die Parameter für die Umwandlung des Druckverlaufs in das Steuersignal für den Antrieb des Ventilators verschieden gewählt sind. Beim Versuch zur Fig. 3 beträgt die Verzögerungszeit der verwendeten Ableitung 50 ms (Millisekunden), das Ableitungs-Zeitintervall ist 500 ms, das Glättungsfenster hat eine zeitliche Ausdehnung von 2000 ms und die Verstärkung des Steuersignals für den Antrieb des Ventilators liegt bei einem relativen Wert von 0.003. Beim Versuch zur Fig. 4 beträgt die Verzögerungszeit der verwendeten Ableitung 50 ms (Millisekunden), das Ableitungs-Zeitintervall ist 500 ms, das Glättungsfenster hat eine zeitliche Ausdehnung von 1000 ms und die Verstärkung des Steuersignals für den Antrieb des Ventilators liegt bei einem relativen Wert von 0.008. Das heisst also, dass bei den beiden Versuchen nur die Länge des Glättungsfenster und die relative Verstärkung des Steuersignals für den Antrieb verstellt wurden. Die Änderungen im Übergang von der Fig. 3 zur Fig. 4 entstehen durch eine Verkürzung des Glättungsfenster und eine Erhöhung der Verstärkung des Steuersignals. Das heisst also, dass mit einer etwas schwächeren Glättung des verwendeten Drucksignals und mit einer stärkeren Reaktion des Ventilators der Luftaustrag schneller und stärker auf Druckanstiege reagiert. Der Ventilator bewirkt kurze Absaugphasen, die gemäss Fig. 3 ca. 7.4 s und gemäss Fig. 4 ca. 4.5 s dauern.

Bei einer weiteren nicht dargestellten Optimierung beträgt die Verzögerungszeit der verwendeten Ableitung 50 ms (Millisekunden), das Ableitungs-Zeitintervall 200 ms, das Glättungsfenster 500 ms und die Verstärkung des Steuersignals für den Antrieb des Ventilators 0.010. Dabei dauern die kurzen Absaugphasen des Ventilators nur noch ca. 2 s (Sekunden). Mit dieser Wahl der Parameter ist die durchschnittliche Ventilatorleistung am Anfang des Dosiervorgangs höher als am Ende und die Druckschwankungen am Ende des Dosiervorgangs können im Wesentlichen beseitigt werden.

Die Steuerung 17 passt den Austrag von Luft bzw. Gas aus dem abgeschlossenen Bereich 12 während des Dosierens im zeitlichen Verlauf variabel an den von der Dosiereinheit 6 veränderten Produktfluss an, so dass zumindest in einer Phase mit grossem Produktfluss die Leistung des Ventilators 16 höher ist als in mindestens einer weiteren Phase mit kleinerem Produktfluss.

Die Steuerung 17 kann aus einem Differenzdruck zwischen dem abgeschlossenen Bereich 12 und der Umgebung sowie einer bei der Druckmessung eingestellten Leistung des Ventilators 16 den Verstopfungsgrad des Filters 14 bestimmen. Wenn der Verstopfungsgrad über einem vorgegebenen Wert liegt, wird die Notwendigkeit eines Reinigungsschritts angezeigt und/oder während des Dosiervorgangs die Leistung des Ventilators 16 dem Verstopfungsgrad entsprechend erhöht.

Zum Durchführen eines Reinigungsschrittes ist in der dargestellten Ausführungsform ventilatorseitig am Filter 14 eine Druckluftquelle 20 angeschlossen. In der Verbindung zwischen der Druckluftquelle 20 und dem Filter 14 ist mindestens ein steuerbares Druckluftventil 21 eingesetzt. Zur Durchführung eines Reinigungsschrittes betätigt die Steuerung 17 das Druckluftventil 21 so dass mindestens ein Druckluft-Stoss dem Filter 14 reingasseitig zugeführt wird.

Die Druckluftquelle 20 und das Druckluftventil 21 können von der Steuerung 17 auch dazu eingesetzt werden, um den abgeschlossenen Bereich 12 mit einem vorgegebenen Überdruck zu beaufschlagen und mit anschliessenden Druckmessungen im abgeschlossenen Bereich 12 zu erfassen, wie schnell der Druck gegen den Umgebungsdruck hin abgebaut wird. Anhand des erfassten Druckabbaus kann angezeigt werden, ob der abgeschlossene Bereich genügend dicht gegen die Umgebung abgeschlossen ist.

Die zu befüllenden Säcke 2 werden vorzugsweise als Abschnitte eines Schlauchmaterials ausgebildet. Dazu wird das Schlauchmaterial 3 in zusammengeraffter Form vom Anschlussbereich 8 der Waage 7 gehalten ist, wobei am unteren Ende des Schlauchmaterials immer ein dichter Abschluss 4 ausgebildet ist und beim Verschliessen eines gefüllten Schlauchabschnitts immer zwei Verschlüsse angebracht werden, einer als oberer Abschluss des unteren Abschnitts und einer als unterer Abschluss des nächsten Abschnitts.

## Patentansprüche

1. Dosier-Vorrichtung (1) zum Abfüllen von schüttfähigen Produkten in Säcke (2) oder Behälter (2a), mit einer Produktzuführung (5), einer Dosiereinheit (6), einer Waage (7) mit einem Anschlussbereich (8) für den zu befüllenden Sack (2) oder Behälter (2a), einer Steuerung (17), welche die Dosiereinheit (6) abhängig von einem vorgegebenen und einem von der Waage (7) gemessenen Abfüllgewicht steuert, einer flexiblen Verbindung (11) zwischen der Dosiereinheit (6) und dem Anschlussbereich (8) der Waage (7), welche flexible Verbindung (11) einen abgeschlossenen Bereich (12) mit den Innenräumen der Dosiereinheit (6), des Anschlussbereichs (8) der Waage (7) und dem Sack (2) oder Behälter (2a) dicht abschliesst, wobei am abgeschlossenen Bereich (12) eine Absaugleitung (13) angeschlossen ist, die über einen Reinigungsfilter (14), ein Absaugventil (15) und einen Ventilator (16) Luft oder Gas aus dem abgeschlossenen Bereich (12) austragbar macht, **dadurch gekennzeichnet, dass** die Steuerung (17) den Austrag von Luft bzw. Gas aus dem abgeschlossenen Bereich (12) während des Dosierens im zeitlichen Verlauf variabel an den vom Dosierelement veränderten Produktfluss anpassen kann so dass zumindest in einer Phase mit grossem Produktfluss die Leistung des Ventilators (16) höher ist als in mindestens einer weiteren Phase mit kleinerem Produktfluss.

2. Dosier-Vorrichtung (1) nach Anspruch 1, **dadurch gekennzeichnet, dass** die Steuerung (17) mit mindestens einem Drucksensor (18) einen zeitlichen Verlauf eines Druckwertes für den abgeschlossenen Bereich (12) erfasst und den zeitlichen Verlauf des Druckwertes während des Dosierens zur Steuerung des Austrags von Luft bzw. Gas aus dem abgeschlossenen Bereich verwendet.

3. Dosier-Vorrichtung (1) nach Anspruch 2, **dadurch gekennzeichnet, dass** der verwendete Druckwert der Differenzdruck zwischen dem abgeschlossenen Bereich (12) und der Umgebung ist.

4. Dosier-Vorrichtung (1) nach Anspruch 2 oder 3, **dadurch gekennzeichnet, dass** die Steuerung (17) den zeitlichen Verlauf des verwendeten Druckwerts mit einem Glättungsfilter glättet, zum Verlauf des verwendeten Druckwerts aus den Änderungen über ein Ableitungs-Zeitintervall eine zeitliche Ableitung erstellt, aus dem geglätteten Druckverlauf, der mit einer vorgegebenen Verzögerungszeit verwendeten Ableitung und einer vorgegebenen Verstärkung die Leistung des Ventilators (16) und/oder die Öffnung des Absaugventils (15) einstellt.

5. Dosier-Vorrichtung (1) nach einem der Ansprüche 3 oder 4, **dadurch gekennzeichnet, dass** die Steuerung (17) aus einem Differenzdruck zwischen dem abgeschlossenen Bereich (12) und der Umgebung sowie einer bei der Druckmessung eingestellten Leistung des Ventilators (16) den Verstopfungsgrad des Filters (14) bestimmbar macht und bei einem über einem vorgegebenen Wert liegenden Verstopfungsgrad die Notwendigkeit eines Reinigungsschritts anzeigt und/oder während des Dosiervorgangs die Leistung des Ventilators (16) dem Verstopfungsgrad entsprechend erhöht.

6. Dosier-Vorrichtung (1) nach einem der Ansprüche 1 bis 5, **dadurch gekennzeichnet, dass** ventilatorseitig am Filter (14) eine Druckluftquelle (20) angeschlossen ist, in der Verbindung zwischen Druckluftquelle (20) und Filter (14) mindestens ein steuerbares Druckluftventil (21) eingesetzt ist und die Steuerung (17) einen Reinigungsschritt durchführbar macht, bei dem mindestens ein Druckluft-Stoss dem Filter (14) reingasseitig zugeführt wird.

7. Dosier-Vorrichtung (1) nach Anspruch 6, **dadurch gekennzeichnet, dass** die Steuerung (17) den abgeschlossenen Bereich (12) von der Druckluftquelle (20) über das steuerbare Druckluftventil (21) mit einem vorgegebenen Überdruck beaufschlagbar macht und mit anschliessenden Druckmessungen im abgeschlossenen Bereich (12) erfassbar macht, wie schnell der Druck gegen den Umgebungsdruck hin abgebaut wird und anhand des erfassten Druckabbaus anzeigt, ob der abgeschlossene Bereich (12) genügend dicht gegen die Umgebung abgeschlossen ist.

8. Dosier-Vorrichtung (1) nach einem der Ansprüche 1 bis 7, **dadurch gekennzeichnet, dass** die zu befüllenden Säcke (2) als Abschnitte eines Schlauchmaterials (3) auszubilden sind und dazu das Schlauchmaterial (3) in zusammengeraffter Form vom Anschlussbereich (8) der Waage (7) gehalten ist, wobei am unteren Ende des Schlauchmaterials (3) jeweils ein dichter Abschluss (4) ausgebildet ist und beim Verschliessen eines gefüllten Schlauchabschnitts immer zwei Verschlüsse anbringbar sind, einer als oberer Abschluss des unteren Abschnitts und einer als unterer Abschluss (4) des nächsten Abschnitts.

9. Verfahren zum Dosieren von schüttfähigen Produkten in Säcke (2) oder Behälter (2a), mit einer Dosier-Vorrichtung (1), die eine Produktzuführung (5), eine Dosiereinheit (6), eine Waage (7) mit einem Anschlussbereich (8) für den zu befüllenden Sack (2) oder Behälter (2a), eine Steuerung (17), welche die Dosiereinheit (6) abhängig von einem vorgegebenen und einem von der Waage (7) gemessenen Abfüllgewicht steuert, und eine flexible Verbindung (11) zwischen der Dosiereinheit (6) und dem Anschlussbereich (8) der Waage (7) umfasst, welche flexible Verbindung (11) einen abgeschlossenen Bereich (12) in den Innenräumen der Dosiereinheit (6), des Anschlussbereichs (8) der Waage (7) und des Sacks (2) oder Behälters (2a) dicht abschliesst, wobei am abgeschlossenen Bereich (12) eine Absaugleitung (13) angeschlossen ist, die über einen Reinigungsfilter (14), ein Absaugventil (15) und einen Ventilator (16) Luft oder Gas aus dem abgeschlossenen Bereich (12) austragbar macht, **dadurch gekennzeichnet, dass** die Steuerung (17) den Austrag von Luft bzw. Gas aus dem abgeschlossenen Bereich (12) während des Dosierens im zeitlichen Verlauf variabel an den vom Dosierelement (6) veränderten Produktfluss anpasst, so dass zumindest in einer Phase mit grossem Produktfluss die Leistung des Ventilators (16) höher ist als in mindestens einer weiteren Phase mit kleinerem Produktfluss.

10. Verfahren nach Anspruch 9, **dadurch gekennzeichnet, dass** die Steuerung (17) mit mindestens einem Drucksensor (18) einen zeitlichen Verlauf eines Druckwertes für den abgeschlossenen Bereich (12) erfasst, vorzugsweise den Differenzdruck zwischen dem abgeschlossenen Bereich (12) und der Umgebung, und den zeitlichen Verlauf des Druckwertes während des Dosierens zur Steuerung des Austrags von Luft bzw. Gas aus dem abgeschlossenen Bereich (12) verwendet.

11. Verfahren nach Anspruch 10, **dadurch gekennzeichnet, dass** die Steuerung (17) den zeitlichen Verlauf des verwendeten Druckwerts mit einem Glättungsfilter glättet, zum Verlauf des verwendeten Druckwerts aus den Änderungen über ein Ableitungs-Zeitintervall eine zeitliche Ableitung erstellt, aus dem geglätteten Druckverlauf, der mit einer vorgegebenen Verzögerungszeit verwendeten Ableitung und einer vorgegebenen Verstärkung die Leistung des Ventilators (16) und/oder die Öffnung des Absaugventils einstellt.

12. Verfahren nach Anspruch 11, **dadurch gekennzeichnet, dass** die Verzögerungszeit der verwendeten Ableitung im Bereich von 10 bis 100 ms, vorzugsweise bei im Wesentlichen 50 ms liegt, das Ableitungs-Zeitintervall in einem Bereich von 100 bis 1000 ms, vorzugsweise in einem Bereich von 150 bis 550 ms liegt und die zeitliche Ausdehnung des Glättungsfensters im Bereich von 400 bis 2200 ms, vorzugsweise in einem Bereich von 450 bis 600 ms liegt.

13. Verfahren nach einem der Ansprüche 10 bis 12, **dadurch gekennzeichnet, dass** die Steuerung (17) aus einem Differenzdruck zwischen dem abgeschlossenen Bereich (12) und der Umgebung sowie einer bei der Druckmessung eingestellten Leistung des Ventilators (16) den Verstopfungsgrad des Filters (14) bestimmt und bei einem über einem vorgegebenen Wert liegenden Verstopfungsgrad die Notwendigkeit eines Reinigungsschritts anzeigt und/oder während des Dosiervorgangs die Leistung des Ventilators (16) dem Verstopfungsgrad entsprechend erhöht.

14. Verfahren nach einem der Ansprüche 10 bis 13, **dadurch gekennzeichnet, dass** ventilatorseitig am Filter (14) eine Druckluftquelle (20) angeschlossen ist, in der Verbindung zwischen Druckluftquelle (20) und Filter (14) mindestens ein steuerbares Druckluftventil (21) eingesetzt ist und von der Steuerung (17) ein Reinigungsschritt durchgeführt wird, bei dem mindestens ein Druckluft-Stoss dem Filter (14) reingasseitig zugeführt wird.

15. Verfahren nach Anspruch 14, **dadurch gekennzeichnet, dass** die Steuerung (17) den abgeschlossenen Bereich (12) von der Druckluftquelle (20) über das steuerbare Druckluftventil (21) mit einem vorgegebenen Überdruck beaufschlagt und mit anschliessenden Druckmessungen im abgeschlossenen Bereich (12) erfasst, wie schnell der Druck gegen den Umgebungsdruck hin abgebaut wird und anhand des erfassten Druckabbaus anzeigt, ob der abgeschlossene Bereich (12) genügend dicht gegen die Umgebung abgeschlossen ist.

## Claims

1. A metering device (1) for filling pourable products into sacks (2) or containers (2a), comprising a product feed (5), a metering unit (6), a scale (7) comprising a connection area (8) for the sack (2) or container (2a) to be filled, a control (17), which controls the metering unit (6) as a function of a filling weight, which is predetermined and which is measured by the scale (7), a flexible connection (11) between the metering unit (6) and the connection area (8) of the scale (7), said flexible connection (11) closes a closed area (12) with the interiors of the metering unit (6), of the connection area (8) of the scale (7) and the sack (2) or container (2a) so as to form a seal, wherein a suction line (13), which makes it possible for air or gas to be discharged from the closed area (12) via a cleaning filter (14), a suction valve (15) and a fan (16), is connected to the closed area (12),
**characterised in that**
the control (17) can adapt the discharge of air or gas, respectively, from the closed area (12) during the metering to the product flow changed by the metering element so as to be variable over time, so that at least in a phase comprising a large product flow, the performance of the fan (16) is higher than in at least a further phase comprising a smaller product flow.

2. The metering device (1) according to claim 1,
**characterised in that**
the control (17) determines a chronological sequence of a pressure value for the closed area (12) with at least one pressure sensor (18) and uses the chronological sequence of the pressure value during the metering to control the discharge of air or gas, respectively, from the closed area.

3. The metering device (1) according to claim 2,
**characterised in that**
the used pressure value is the differential pressure between the closed area (12) and the environment.

4. The metering device (1) according to claim 2 or 3,
**characterised in that**
the control (17) smoothes the chronological sequence of the used pressure value by means of a smoothing filter, creates a time derivative for the sequence of the used pressure value from the changes via a derivative time interval, sets the performance of the fan (16) and/or the opening of the suction valve (15) pursuant to the smoothed pressure course, the derivative used with a predetermined delay time and a predetermined amplification.

5. The metering device (1) according to any one of claims 3 or 4,
**characterised in that**
the control (17) makes it possible to determine the clogging degree of the filter (14) from a differential pressure between the closed area (12) and the environment as well as from a performance of the fan (16) set in response to the pressure measurement, and displays the need for a cleaning step in the case of a clogging degree above a predetermined value, and/or increases the performance of the fan (16) in accordance with the clogging degree during the metering process.

6. The metering device (1) according to any one of claims 1 to 5,
**characterised in that**
a compressed air source (20) is connected to the filter (14) on the fan side, that at least one controllable compressed air valve (21) is inserted in the connection between compressed air source (20) and filter (14), and the control (17) makes it possible to carry out a cleaning step with at least one blast of compressed air supplied to the filter (14) on the clean gas side.

7. The metering device (1) according to claim 6,
**characterised in that**
the control (17) makes it possible for a predetermined excess pressure to be applied to the closed area (12) from the compressed air source (20) via the controllable compressed air valve (12) and makes it possible by means of subsequent pressure measurements in the closed area (12) to detect how fast the pressure is reduced towards the ambient pressure, and displays by means of the detected pressure reduction whether the closed region (12) is closed against the environment in a sufficiently tight manner.

8. The metering device (1) according to any one of claims 1 to 7,
**characterised in that**
the sacks (2) to be filled are to be embodied as sections of a tube material (3) and the connection area (8) of the scale (7) holds the tube material (3) in a gathered manner for this purpose, wherein a tight seal (4) is in each case embodied on the lower end of the tube material (3), and two closures can always be attached when closing a filled tube section, one as upper seal of the lower section and one as lower seal (4) of the next section.

9. A method for metering pourable products in sacks (2) or containers (2a), comprising a metering device (1), which comprises a product feed (5), a metering unit (6), a scale (7) comprising a connection area (8) for the sack (2) or container (2a) to be filled, a control (17), which controls the metering unit (6) as a function of a filling weight, which is predetermined and which is measured by the scale (7), and a flexible connection (11) between the metering unit (6) and the connection area (8) of the scale (7), said flexible connection (11) closes a closed area (12) in the interiors of the metering unit (6), of the connection area (8) of the scale (7) and of the sack (2) or container (2a) so as to form a seal, wherein a suction line (13), which makes it possible for air or gas to be discharged from the closed area (12) via a cleaning filter (14), a suction valve (15) and a fan (16), is connected to the closed area (12), **characterised in that**
the control (17) adapts the discharge of air or gas, respectively, from the closed area (12) during the metering to the product flow changed by the metering element (6) so as to be variable over time, so that at least in a phase comprising a large product flow, the performance of the fan (16) is higher than in at least a further phase comprising a smaller product flow.

10. The method according to claim 9, **characterised in that** the control (17) determines a chronological sequence of a pressure value for the closed area (12) with at least one pressure sensor (18), preferably the differential pressure between the closed area (12) and the environment, and uses the chronological sequence of the pressure value during the metering to control the discharge of air or gas, respectively, from the closed area (12).

11. The method according to claim 10,
**characterised in that**
the control (17) smoothes the chronological sequence of the used pressure value by means of a smoothing filter, creates a time derivative for the sequence of the used pressure value from the changes via a derivative time interval, sets the performance of the fan (16) and/or the opening of the suction valve pursuant to the smoothed pressure course, the derivative used with a predetermined delay time and a predetermined amplification.

12. The method according to claim 11,
**characterized in that**
the delay time of the used derivative lies in the range of between 10 and 100 ms, preferably substantially at 50 ms, the derivative time interval lies in a range of between 100 and 1000 ms, preferably in a range of between 150 and 550 ms, and the chronological expansion of the smoothing window lies in the range of between 400 and 2200 ms, preferably in a range of between 450 and 600 ms.

13. The method according to any one of claims 10 to 12,
**characterised in that**
the control (17) determines the clogging degree of the filter (14) from a differential pressure between the closed area (12) and the environment as well as from a performance of the fan (16) set in response to the pressure measurement, and displays the need for a cleaning step in the case of a clogging degree above a predetermined value, and/or increases the performance of the fan (16) in accordance with the clogging degree during the metering process.

14. The method according to any one of claims 10 to 13,
**characterised in that**
a compressed air source (20) is connected to the filter (14) on the fan side, that at least one controllable compressed air valve (21) is inserted in the connection between compressed air source (20) and filter (14), and the control (17) carries out a cleaning step with at least one blast of compressed air supplied to the filter (14) on the clean gas side.

15. The method according to claim 14,
**characterised in that**
the control (17) applies a predetermined excess pressure to the closed area (12) from the compressed air source (20) via the controllable compressed air valve (12) and uses subsequent pressure measurements in the closed area (12) to detect how fast the pressure is reduced towards the ambient pressure, and displays by means of the detected pressure reduction whether the closed region (12) is closed against the environment in a sufficiently tight manner.

## Revendications

1. Dispositif de dosage (1) pour le remplissage de produits en vrac dans des sachets (2) ou récipients (2a), comprenant une alimentation en produits (5), une unité de dosage (6), une balance (7) avec une partie de raccordement (8) pour le sachet (2) ou récipient (2a) à remplir, une commande (17) qui commande l'unité de dosage (6) en fonction d'un poids de remplissage prédéfini et d'un poids de remplissage mesuré par la balance (7), une liaison flexible (11) entre l'unité de dosage (6) et la partie de raccordement (8) de la balance (7), laquelle liaison flexible (11) ferme de façon étanche une partie fermée (12) avec les espaces intérieurs de l'unité de dosage (6), de la partie de raccordement (8) de la balance (7) et le sachet (2) ou récipient (2a), une ligne d'aspiration (13) est raccordée à la partie fermée (12), laquelle permet d'emmener de l'air ou du gaz venant de la partie fermée (12) par le biais d'un filtre de nettoyage (14), d'une soupape d'aspiration (15) et d'un ventilateur (16),
**caractérisé en ce que**
la commande (17) peut adapter l'émission d'air ou de gaz venant de la partie fermée (12) pendant le dosage, dans le déroulement temporel, de façon variable au débit de produit modifié par l'élément de dosage, de sorte qu'au moins dans une phase à gros débit de produit, la puissance du ventilateur (16) soit supérieure à celle dans au moins une phase supplémentaire avec un débit de produit plus petit.

2. Dispositif de dosage (1) selon la revendication 1,
**caractérisé en ce que**
la commande (17) détecte un déroulement temporel d'une valeur de pression pour la partie fermée (12) par au moins un capteur de pression (18) et emploie le déroulement temporel de la valeur de pression pendant le dosage pour commander l'émission d'air, respectivement de gaz, venant de la zone fermée.

3. Dispositif de dosage (1) selon la revendication 2,
**caractérisé en ce que**
la valeur de pression employée est la pression différentielle entre la partie fermée (12) et l'environnement.

4. Dispositif de dosage (1) selon la revendication 2 ou 3,
**caractérisé en ce que**
la commande (17) filtre le déroulement temporel de la valeur de pression employée avec un filtre de lissage, établit une dérivée temporelle pour le déroulement de la valeur de pression employée à partir des modifications sur un intervalle de temps de dérivée, règle la puissance du ventilateur (16) et/ou l'ouverture de la soupape d'aspiration (15) à partir du déroulement de pression lissé, de la dérivée employée avec un délai de temporisation prédéfini et d'une amplification prédéfinie.

5. Dispositif de dosage (1) selon l'une des revendications 3 ou 4,
**caractérisé en ce que**
la commande (17) permet de définir le degré d'engorgement du filtre (14) à partir d'une pression différentielle entre la partie fermée (12) et l'environnement ainsi qu'une puissance du ventilateur (16) réglée lors de la mesure de la pression, et indique la nécessité d'une étape de nettoyage en cas d'un degré d'engorgement au-delà d'une valeur prédéfinie et/ou augmente la puissance du ventilateur (16) en fonction du degré d'engorgement, pendant la procédure de dosage.

6. Dispositif de dosage (1) selon l'une des revendications 1 à 5,
**caractérisé en ce que**
côté ventilateur, une source d'air comprimé (20) est raccordée sur le filtre (14), au moins une soupape d'air comprimé (21) est employée dans la liaison entre la source d'air comprimé (20) et le filtre (14), et la commande (17) permet d'exécuter une étape de nettoyage dans laquelle au moins une poussée d'air comprimé est amenée au filtre (14), côté gaz purifié.

7. Dispositif de dosage (1) selon la revendication 6,
**caractérisé en ce que**
la commande (17) permet d'alimenter la partie fermée (12) avec une surpression prédéfinie à partir de la source d'air comprimé (20) par le biais de la soupape d'air comprimé (21) pouvant être commandée et permet de détecter par des mesures de pression ultérieures dans la partie fermée (12), à quelle vitesse la pression réduit contre la pression ambiante et montre à l'aide de la réduction de pression détectée si la zone fermée (12) est fermée de façon suffisamment étanche contre l'environnement.

8. Dispositif de dosage (1) selon l'une des revendications 1 à 7,
**caractérisé en ce que**
les sachets (2) à remplir doivent être conçus en tant que tronçons d'un matériau de tuyau (3) et que pour cela, le matériau de tuyau (3) est maintenu en forme ramassée depuis la partie de raccordement (8) de la balance (7), dans lequel une terminaison étanche (4) est formée respectivement sur l'extrémité inférieure du matériau de tuyau (3) et lors de la fermeture d'un tronçon de tuyau rempli, deux bouchons peuvent être toujours posés, l'un en tant que fermeture supérieure du tronçon inférieur et l'un en tant que fermeture inférieure (4) du tronçon suivant.

9. Procédé destiné au dosage de produits en vrac dans des sachets (2) ou récipients (2a), comprenant un dispositif de dosage (1) qui comprend une alimentation en produits (5), une unité de dosage (6), une balance (7) avec une partie de raccordement (8) pour le sachet (2) ou récipient (2a) à remplir, une commande (17) qui commande l'unité de dosage (6) en fonction d'un poids de remplissage prédéfini et d'un poids de remplissage mesuré par la balance (7), et une liaison flexible (11) entre l'unité de dosage (6) et la partie de raccordement (8) de la balance (7), laquelle liaison flexible (11) ferme de façon étanche une partie fermée (12) dans les espaces intérieurs de l'unité de dosage (6), de la partie de raccordement (8) de la balance (7) et du sachet (2) ou récipient (2a), une ligne d'aspiration (13) est raccordée sur la partie fermée (12), laquelle permet d'emmener de l'air ou du gaz venant de la partie fermée (12) par le biais d'un filtre de nettoyage (14), d'une soupape d'aspiration (15) et d'un ventilateur (16),
**caractérisé en ce que**
la commande (17) adapte l'émission d'air ou de gaz venant de la partie fermée (12) pendant le dosage, dans le déroulement temporel, de façon variable au débit de produit modifié par l'élément de dosage (6), de sorte qu'au moins dans une phase à gros débit de produit, la puissance du ventilateur (16) soit supérieure à celle dans au moins une phase supplémentaire avec un débit de produit plus petit.

10. Procédé selon la revendication 9, **caractérisé en ce que** la commande (17) détecte un déroulement temporel d'une valeur de pression pour la partie fermée (12) par au moins un capteur de pression (18), de préférence la pression différentielle entre la partie fermée (12) et l'environnement, et emploie le déroulement temporel de la valeur de pression pendant le dosage pour commander l'émission d'air, respectivement de gaz, venant de la zone fermée (12).

11. Procédé selon la revendication 10,
**caractérisé en ce que**
la commande (17) filtre le déroulement temporel de la valeur de pression employée avec un filtre de lissage, établit une dérivée temporelle pour le déroulement de la valeur de pression employée à partir des modifications sur un intervalle de temps de dérivée, règle la puissance du ventilateur (16) et/ou l'ouverture de la soupape d'aspiration à partir du déroulement de pression lissé, la dérivée employée avec un délai de temporisation prédéfini et une amplification prédéfinie.

12. Procédé selon la revendication 11,
**caractérisé en ce que**
le délai de temporisation de la dérivée employée est situé dans une plage de 10 à 100 ms, de préférence essentiellement de 50 ms, l'intervalle temporel de dérivée est situé dans une plage de 100 à 1000 ms, de préférence dans une plage de 150 à 550 ms et l'allongement temporel de la fenêtre d'égalisation est situé dans une plage de 400 à 2200 ms, de préférence dans une plage de 450 à 600 ms.

13. Procédé selon l'une des revendications 10 à 12,
**caractérisé en ce que**
la commande (17) définit le degré d'engorgement du filtre (14) à partir d'une pression différentielle entre la partie fermée (12) et l'environnement ainsi qu'une puissance du ventilateur (16) réglée lors de la mesure de la pression, et indique la nécessité d'une étape de nettoyage en cas d'un degré d'engorgement au-delà d'une valeur prédéfinie et/ou augmente la puissance du ventilateur (16) en fonction du degré d'engorgement, pendant la procédure de dosage.

14. Procédé selon l'une des revendications 10 à 13,
**caractérisé en ce que**
côté ventilateur, une source d'air comprimé (20) est raccordée sur le filtre (14), au moins une soupape d'air comprimé (21) est employée dans la liaison entre la source d'air comprimé (20) et le filtre (14), et la commande (17) exécute une étape de nettoyage dans laquelle au moins une poussée d'air comprimé est amenée au filtre (14), côté gaz purifié.

15. Procédé selon la revendication 14,
**caractérisé en ce que**
la commande (17) alimente la partie fermée (12) avec une surpression prédéfinie à partir de la source d'air comprimé (20) par le biais de la soupape d'air comprimé (21) pouvant être commandée et détecte par des mesures de pression ultérieures dans la partie fermée (12), à quelle vitesse la pression réduit contre la pression ambiante et montre à l'aide de la réduction de pression détectée si la zone fermée (12) est fermée de façon suffisamment étanche contre l'environnement.
